# EUROPEAN PATENT APPLICATION

(11) **EP 0 806 696 A2**
(43) Date of publication of application: **12.11.1997**
(21) Application number: 97303182.6
(22) Date of filing: 09.05.1997
(51) Int. Cl.: G02F 1/125

(54) **Fabrication of an acousto-optic filter**

(30) Priority: 10.05.1996 GB 9609827
(71) Applicant: Integrated Optical Components Limited, Witham, Essex CM8 3YQ (GB)
(72) Inventor: O'Donnell, Adrian Charles, Chelmsford, Essex CM2 9TQ (GB)
(74) Representative: Gillam, Francis Cyril

(57) **Abstract**

A process for the manufacture of an acousto-optic tunable filter (AOTF) employs a single soaking step at an elevated temperature for an extended period. A suitable dopant such as titanium is deposited on a substrate typically of lithium niobate, in three parallel strips so that following soaking, an optical waveguide is formed between regions defining the limits of the acoustic waveguide. The thickness and linewidth of the deposited dopant which forms the optical waveguide are selected having regard to the soaking period required to form the acoustic waveguide, so that a predetermined mode geometry for the optical waveguide will be formed in substantially the same soaking period as is required to form the acoustic waveguide.

## Description

This invention relates to a process for the manufacture of an acousto-optic component, including both optical and acoustic waveguides.

Acousto-optic tunable filters (referred to hereinafter as AOTFs) are increasingly forming key elements in optical data communication networks. Such components allow the dynamic routing of transmission channels which have been wavelength-division multi-plexed on to an optical fibre. The routing of the channels can be reconfigured as required, with re-configuration times of the order of microseconds. This is achieved by launching a relatively low frequency signal as compared to the optical signal (which low frequency signal is usually referred to as an acoustic wave, but which is still in the RF band and is typically of a few hundred MHz) in to a suitable waveguide (usually referred to as an "acoustic waveguide") in the device, to interact with the optical signal propagated along an optical waveguide also formed in the device. The interaction will allow the optical wave to leave the device through a selected port, dependent upon the frequency of the acoustic wave.

In addition to the selective tuning function referred to above, AOTFs are being developed to allow operation directly with other devices such as sensors for certain activities, or as the key element for a large number of sensors to permit the multiplexing of the outputs thereof to a single control or analysis unit. For example, the sensors may be arranged to sense the presence of or the constituents of certain chemicals, in chemical processing plants, the outputs thereof being multiplexed to a single analysis unit.

It is anticipated that AOTFs will increasingly be used in ever greater numbers. Consequently, techniques to reduce the fabrication complexity of these devices are most important, in order to reduce the final cost of such components.

Research is also being effected into ways of reducing the required drive power of an AOTF. This directly affects a final system in two ways: namely, cheaper oscillators or drivers may be employed, so reducing the cost of an overall system; and also performance degrading acoustic non-linearities may be reduced. As a means of reducing the device power, acoustic waveguides which allow a launched acoustic signal to be guided further along the device may be designed, so giving a more efficient interaction between the acoustic and optical waves. In addition, acoustic waveguides allow the acoustic-optical interactions to be modified in a better controlled manner, so improving device performance.

The fabrication of a device including an acoustic waveguide requires fabrication steps additional to those required to manufacture the optical waveguide. These additional steps greatly increase the time required to manufacture an AOTF and thus lead to significantly higher costs, as compared to the manufacture of conventional optical devices.

The current state-of-the-art fabrication technique for an AOTF is firstly to diffuse titanium into a lithium niobate substrate in order to form the acoustic waveguide. A relatively thick layer of titanium (1500Å to 5000Å thick) is deposited, followed by typically 20 to 40 hours soaking at an elevated temperature, so forming the acoustic waveguide. Then, an additional photolithography, deposition and diffusion cycle is required, to form the optical waveguide. For devices operating in the main telecommunication window of 1.3µm to 1.55µm, this is achieved by depositing a titanium strip 4µm to 8µm wide and 500Å to 1000Å thick, and soaking the substrate for a period typically between 6 and 12 hours. Diffusion distances are a function of the square root of soaking time, and so this leads to diffusion distances for the optical and acoustic waveguides which are significantly different.

Diffusion times are typically around 30 hours for the acoustic waveguide and 10 hours for the optical waveguide; the soaking times thus differ by a factor of 3 and so the diffusion depths vary by a factor of about 1.75. From this, it has been presumed to date that were an attempt be made to manufacture an optical waveguide at the same time as the manufacture of an acoustic waveguide, the soaking time required for the acoustic waveguide would produce an "over-diffused" optical waveguide. Such a waveguide would have a very poor performance, including high propagation losses and a poor modal match to the optical fibres.

The present invention stems from research on manufacturing methods for optical components which include both optical and acoustic waveguides, in an attempt to reduce the time required for a sequential process, by producing both waveguides at the same time.

According to the present invention, there is provided a process for the manufacture of an acousto-optic tunable filter in which both an optical waveguide and an acoustic waveguide are formed in a substrate by the steps of photolithographing a desired pattern of strips on the substrate for the formation of the waveguides, depositing on the substrate a substrate dopant, and then diffusing into the substrate the dopant by soaking the substrate at an elevated temperature for a protracted period, in which process both the thickness and the width of the deposited dopant for forming the optical waveguide are selected having regard to the soaking period required to form the acoustic waveguide, so that an optical waveguide having a pre-determined optical performance will be formed in substantially the same soaking period as is required to form the acoustic waveguide.

The process of the present invention requires selection of the widths and thicknesses of the strips of deposited dopant - which normally will be titanium or a titanium-bearing composition, when the substrate is of lithium niobate - such that an optical waveguide of near optimal configuration will be formed in the same elevated temperature soaking period as is required to form the acoustic waveguide. To achieve this, in a particularly preferred manufacturing process of this invention the thickness and width of the deposited dopant are deliberately centred at a different fabrication point to those used in the standard optical waveguide. Dependent upon the actual performance required this route offers two different enhancements to the known manufacturing processes. The first enhancement is a merging of the diffusion steps to a single stage for simultaneous production of the optical and acoustic waveguides. The second enhancement, which requires more detailed modelling and design analysis, allows the dopant thicknesses to be made the same for the two waveguides. In this manner the full waveguide fabrication is reduced to a single photolithography, deposition and diffusion cycle.

By adopting the measures described above, the extended diffusion process required for the acoustic waveguide will result in a sufficient diffusion profile for the optical waveguide, with a comparable lateral width as would have been formed with a shorter soaking time. The larger diffusion depth may be corrected, as the initial titanium thickness is greater.

Performance of the fabrication process described above will result in a much reduced device manufacture time since only one prolonged soaking at an elevated temperature is required. This leads to lower fabrication costs. There is however a further advantage in the full optimisation, in that only one photolithography, deposition and diffusion stage may be required, so eliminating errors in alignment between an already formed acoustic waveguide and the photolithography step for the optical waveguide, to be formed on the substrate, so reducing faults through multiple photolithography, and reducing breakages or other failures due to repeated handling.

By way of example only the conventional fabrication technique and two specific fabrication techniques of the present invention will now be described in detail, reference being made to the accompanying drawings in which:-
Figures 1A and 1B diagrammatically show the first stage of a conventional AOTF fabrication technique for forming an acoustic waveguide, respectively comprising a photolithography and deposition step and then a diffusion step;
Figures 2A and 2B diagrammatically show the second stage of the conventional AOTF fabrication technique for forming an acoustic waveguide, respectively comprising a further photolithography and deposition step and then a further diffusion step;
Figure 3 shows the optical mode solution for the conventional optical waveguide fabrication technique of Figures 1 and 2, using a 7µm linewidth, 600Å thick deposited dopant;
Figure 4 shows the optical mode profile for the conventional waveguide fabrication technique (of Figure 3) if the diffusion time is extended significantly, to 30 hours with no compensation in the deposited dopant which forms the optical waveguide;
Figure 5 shows the increased deposited titanium thickness as a function of the deposited linewidth when performing a method of the present invention, to obtain a similar optical waveguide as that obtained with a conventional manufacturing process;
Figure 6 shows the optical mode for a case where the deposited dopant is 4µm wide and 3500Å thick, soaked for 30 hours;
Figure 7 is similar to Figure 6 but shows the optical mode obtained with 10µm wide, 1700Å thick deposited dopant, soaked for 30 hours;
Figures 8 and 9 respectively show the lateral and vertical optical mode sizes obtained by examples of methods of this invention, for various dopant linewidths and thicknesses, as compared to the conventional process with a 7µm wide, 600Å thick deposited dopant;
Figures 10A, 10B and 10C diagrammatically illustrate a single stage fabrication technique, according to a first embodiment of this invention; and
Figures 11A and 11B diagrammatically illustrate a second embodiment of a single stage fabrication technique.

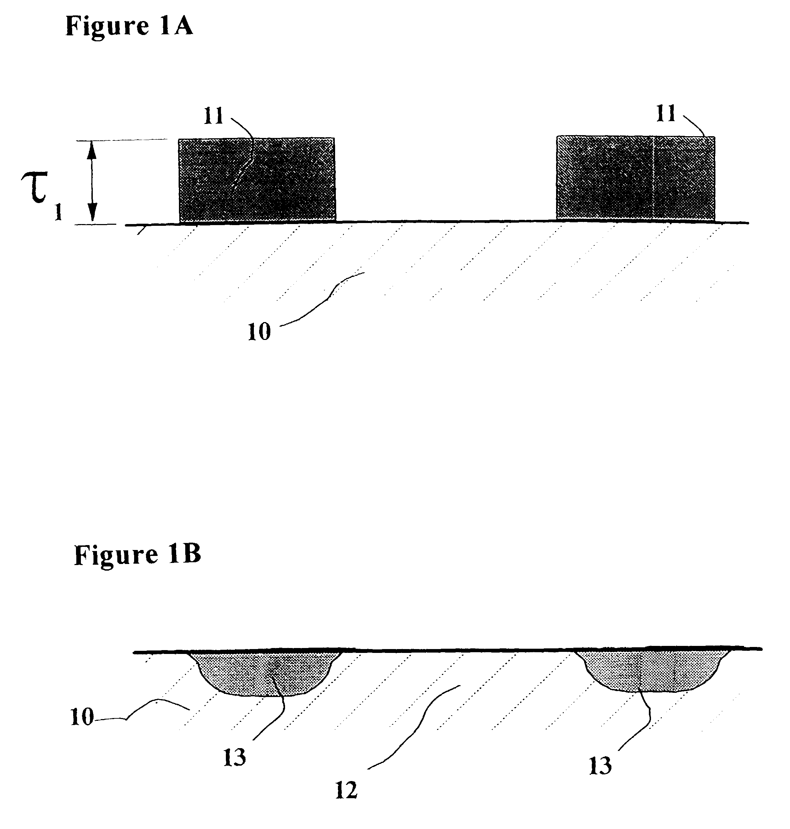

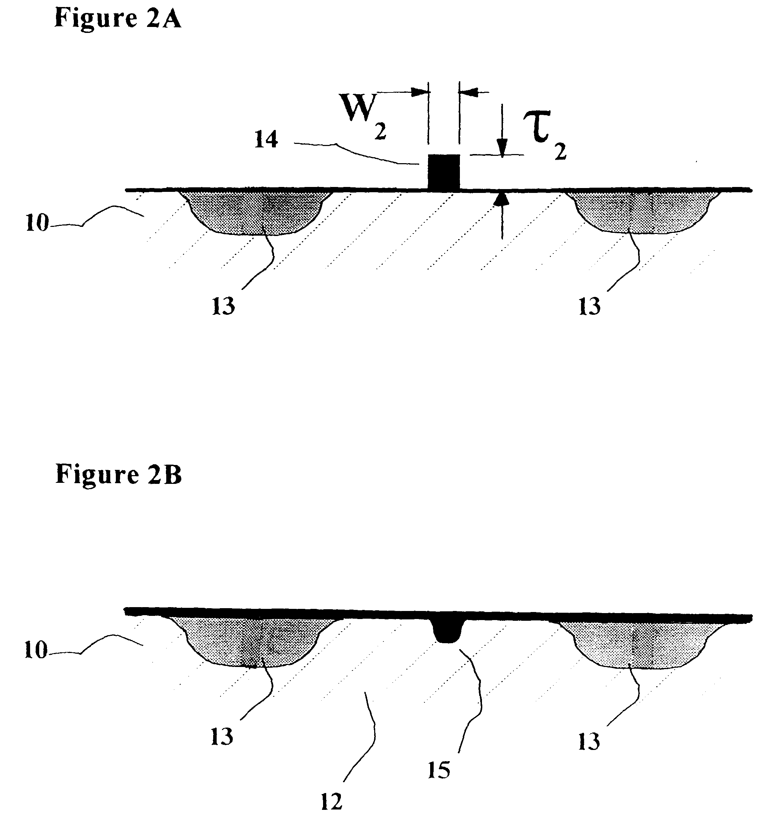

Referring initially to Figures 1 and 2, Figure 1A illustrates a substrate 10 of lithium niobate, in to which titanium or a titanium composition is to be diffused in order locally to change the refractive index of the substrate, thereby to form waveguides for both an optical signal and a so-called acoustic signal which typically may be within the frequency range of several hundred MHz. The first stage of the manufacturing process is the production of the acoustic waveguide. Using conventional photolithography techniques, two elongate parallel strips are marked on the substrate at the required locations whereafter titanium is deposited on those strips to form corresponding titanium strips 11 on the surface of the substrate (Figure 1A). The deposited titanium strips are typically 1500-5000Å thick and 100 µm wide. The deposited titanium is then diffused in to the substrate by prolonged soaking at an elevated temperature, thereby forming a waveguide 12 between the two diffused zones 13 (Figure 1B). Typically the diffusion step is for about 20 hours, at a temperature of 1025°C.

Subsequently an optical waveguide is formed within the acoustic waveguide. Using similar photolithography and deposition techniques, a further strip 14 of titanium is deposited centrally between and parallel to the diffused titanium forming the acoustic waveguide (Figure 2A). The further strip 14 is typically 7µm wide and 600Å thick. That further strip 14 is then diffused into the substrate by another diffusion step, typically for about 10 hours, at a temperature of 1025°C. This forms an optical waveguide 15 (Figure 2B), and gives a total diffusion time for the acoustic waveguide of (20+10) hours = 30h.

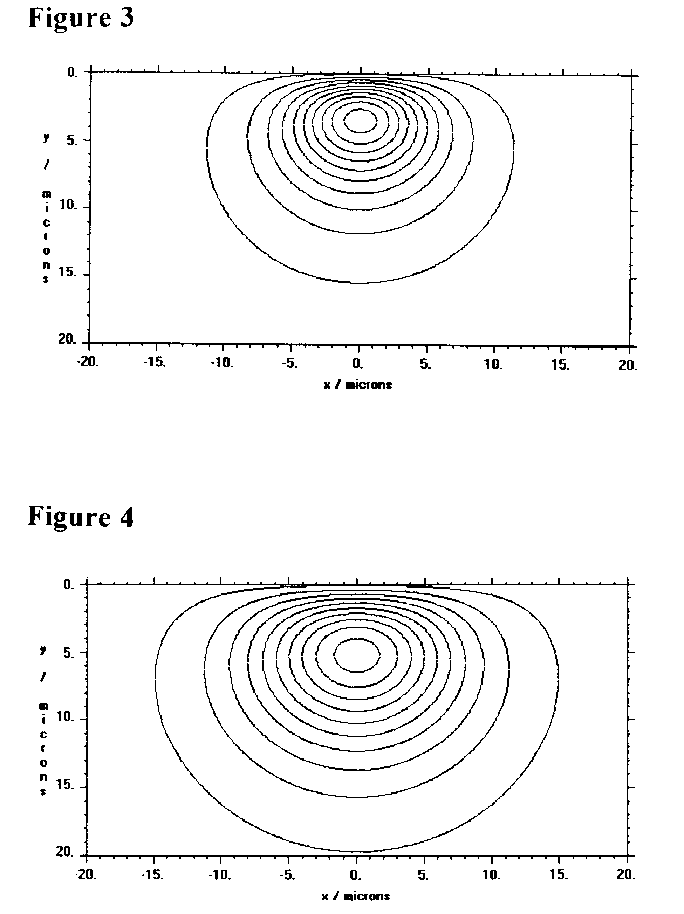

Figure 3 shows the optical waveguide mode profile resulting from the refractive index change induced by the diffusion of the titanium into the substrate. By contrast, Figure 4 shows the effect of an extended diffusion on this waveguide geometry. As can be seen, the diffused region is larger, the index change is reduced significantly, and the optical mode is much larger. This effect represents a waveguide pushed towards cut-off, where it is not effectively confining the optical energy.

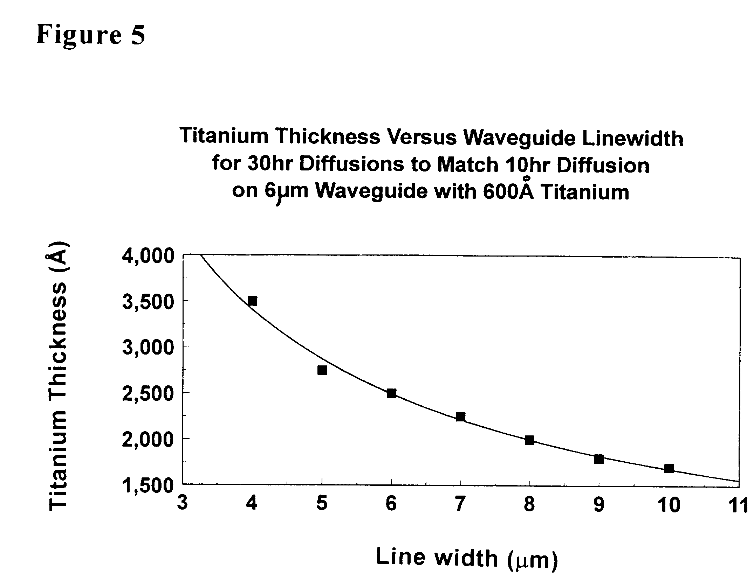

A series of simulations for forming the optical waveguide by controlling the deposited dopant and using extended diffusion times has shown a range of solutions which yield an optical mode profile substantially corresponding to that obtained by the conventional manufacturing process. Referring to Figure 5, it can be seen increasing dopant thickness and reducing dopant linewidth leads to design points whereby the effect of the extended diffusion can be overcome. Extending this further leads to the intersection of the optical dopant thickness-linewidth curve with the thickness used for the acoustic waveguide. In this manner the dopant thicknesses for acoustic and optical waveguides may be substantially the same, the exact design being dependent upon the chosen acoustic dopant thickness, which typically is in the range 1500Å to 5000Å.

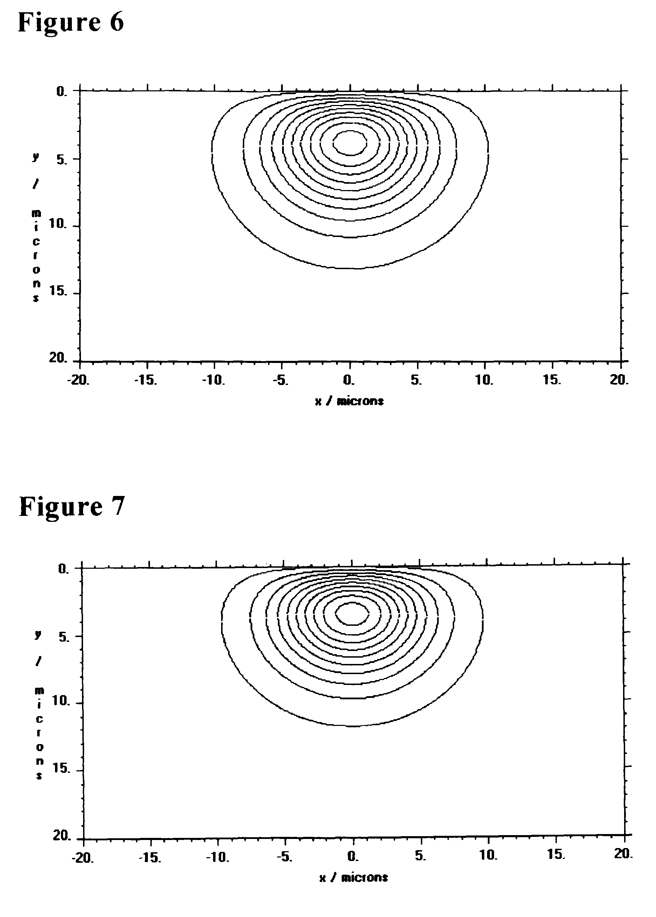

Figure 6 shows the optical mode profile obtained with a deposited dopant linewidth of 4µm and a thickness of 3500Å, following soaking for 30 hours. Similarly, Figure 7 shows the optical mode profile obtained with a deposited dopant linewidth of 10µm and a thickness of 1700Å, following soaking for 30 hours. Thus, it can be seen that for the same total soaking time as is required to form the acoustic waveguide (that is, 30 hours), an optical waveguide of a satisfactory mode profile can be obtained by suitable control of the linewidth and thickness of the deposited dopant which forms that optical waveguide.

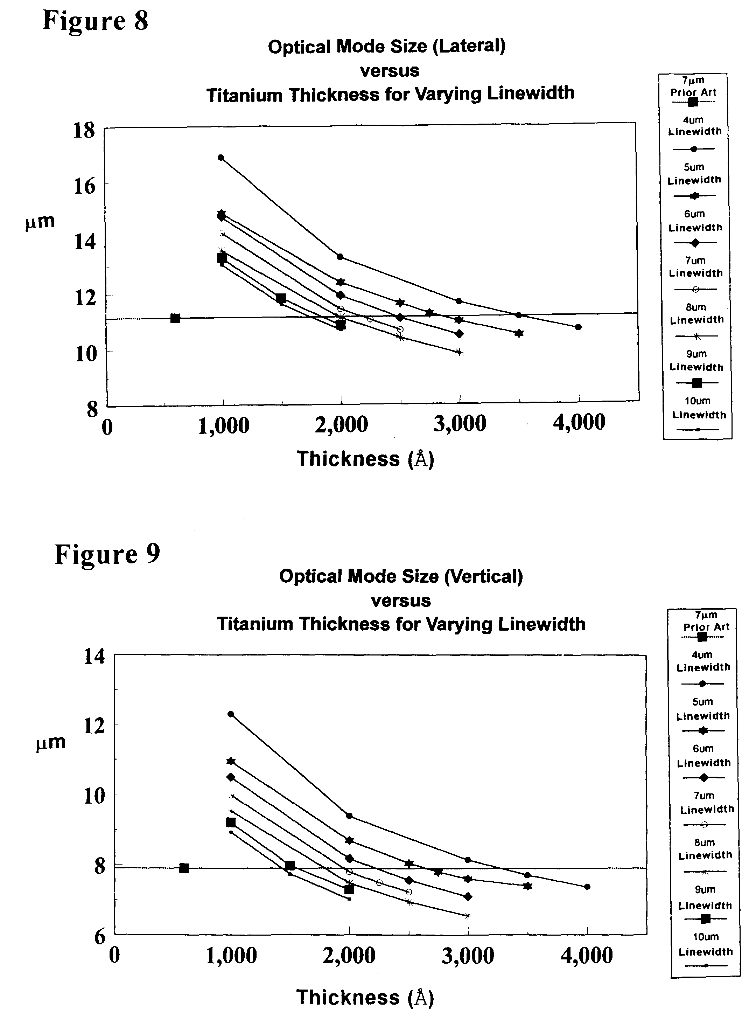

Figures 8 and 9 show the obtained lateral and vertical optical mode sizes obtained both for a prior art 7µm linewidth, 600Å thick dopant soaked for 10 hours and comparative lateral and vertical mode sizes using linewidths and thicknesses according to this invention. In the case of the prior art dopant, it can be seen that 10 hours soaking gives rise to a lateral optical mode size of just over 11µm and a vertical optical mode size of just under 8µm. Similar lateral and vertical mode sizes can be obtained when using 30 hours diffusion soaking times, by using appropriate linewidths and thicknesses selected from Figures 8 and 9. For example, a 4µm linewidth with a thickness of about 3500Å will give rise to a satisfactory optical mode profile following 30 hours soaking, which mode profile is similar to that obtained by the conventional prior art process using a 7µm linewidth, 600Å thick dopant soaked for 10 hours.

Typical mode geometries obtained with various deposited linewidths and thicknesses as well as with the prior art process are set out in the following table. In each case, the soaking was performed at 1025°C.

| Deposited Linewidth | Deposited Thickness | Soaking time @ 1025°C hours | Mode Width µm | Mode Depth µm |
|---|---|---|---|---|
| 7µm | 600Å | 10 | 11.16 | 7.90 |
| 4µm | 3500Å | 30 | 11.15 | 7.71 |
| 5µm | 2750Å | 30 | 11.28 | 7.8 |
| 6µm | 2500Å | 30 | 11.12 | 7.57 |
| 7µm | 2250Å | 30 | 11.05 | 7.49 |
| 8µm | 2000Å | 30 | 11.13 | 7.48 |
| 9µm | 1800Å | 30 | 11.15 | 7.64 |
| 10µm | 1700Å | 30 | 11.05 | 7.40 |

The first example, using 7µm linewidth and 600Å thickness, represents the conventional prior art process.

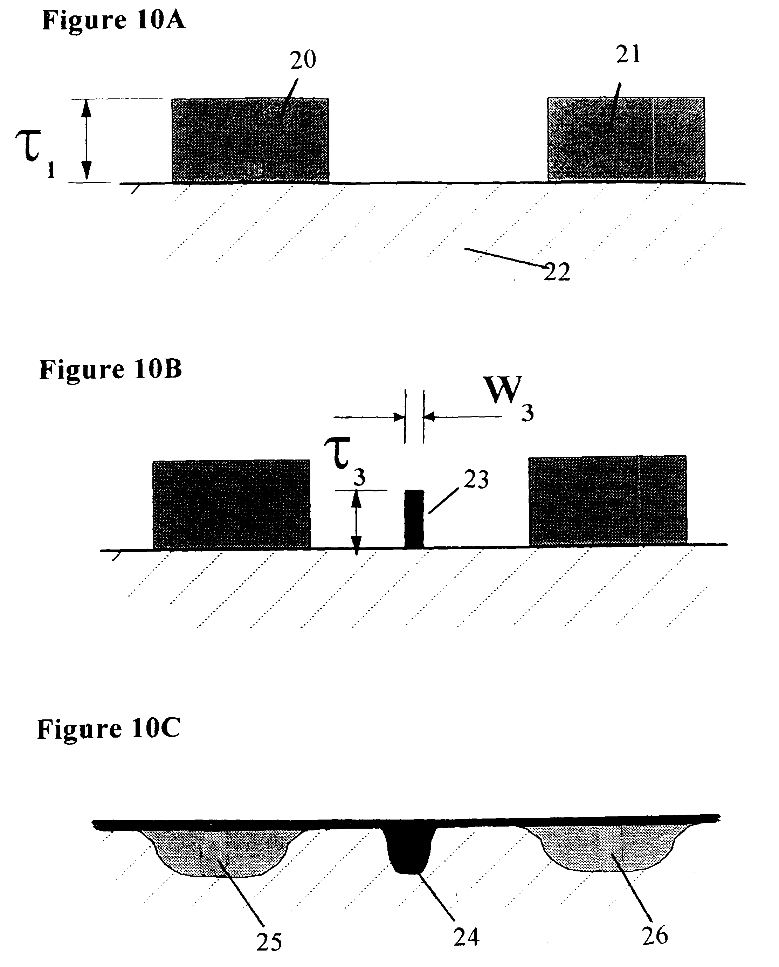

Referring now to Figures 10A, 10B and 10C, a first AOTF waveguide fabrication technique of this invention is illustrated. In a first step (Figure 10A), two strips 20 and 21 of titanium are deposited on the substrate 22 for forming the acoustic waveguide, using conventional photolithography and deposition techniques. Then, repeating the photolithography and deposition techniques, a further strip 23 of titanium is deposited on the substrate 22 (Figure 2B). This further strip is located centrally between and parallel to the two strips 20 and 21 already deposited. The further strip 23 has a greater thickness t3 as compared to the thickness t₂ (Figure 2A) of the prior art process. The further strip 23 also has a width w₃ which may be less than would conventionally be employed, for example as shown in Figure 2A. Typically, w₃ may be in the range of +40% to -50% of w₂, and so in the range of 4µm to 10µm, as compared to w₂ of 7µm. Similarly, t₃ (1000Å to 4000Å) may be +25% to +600% greater than t₂ (600Å).

Following the completion of the two deposition steps illustrated in Figures 10A and 10B, the substrate is subjected to a soaking step at an elevated temperature of about 1025°C, for about 30 hours. This produces in the substrate both an optical waveguide 24 of essentially the required configuration, as well as areas 25 and 26 of diffusion between which is defined an acoustic waveguide (Figure 10C). The process is very much faster to perform than the conventional process described above, in that only one continuous soaking step is required and the accuracy of alignment is much improved since the second photolithography step may be performed immediately after the first photolithography and deposition step, whilst the substrate is still mounted on a suitable carrier for this purpose.

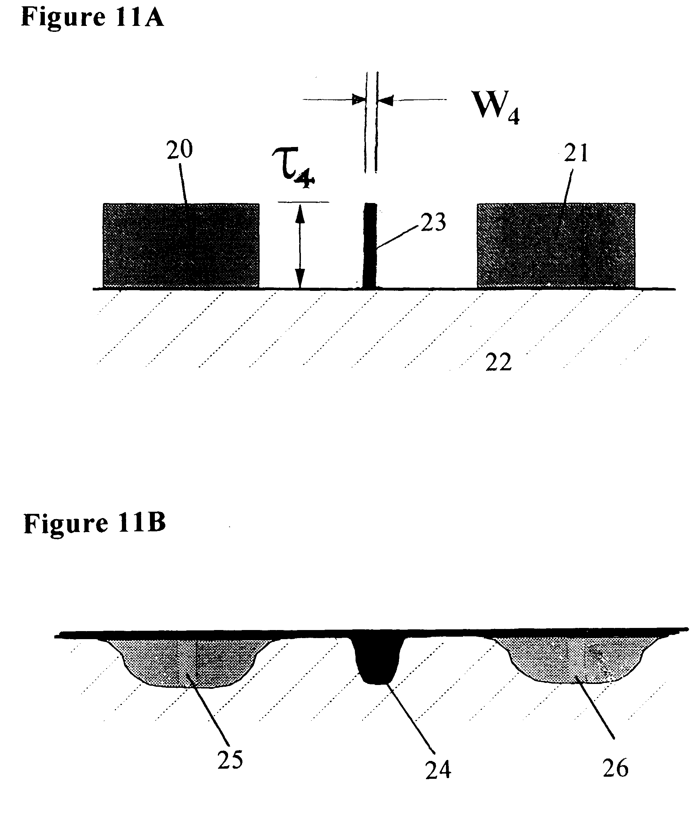

Figures 11A and 11B show the two steps of a process similar to that described above, except that there is only one photolithography and deposition step. In this similar process, the same deposited thickness t₄ of the strips of titanium is used for forming the acoustic waveguide and the optical waveguide but the width w₄ of the deposited titanium for the optical waveguide is significantly less than would conventionally be employed, as shown in Figure 2A. The width w₄ of the strip for forming the optical waveguide may typically be about 50% less than the width w₂ employed in the conventional process.

When subjected to a single soaking step at an elevated temperature of typically 1025°C for about 30 hours, waveguide structures are formed in the substrate as shown in Figure 11B. The optical mode profile of the optical waveguide compares favourably with that of the conventional process and thus this process gives rise to a satisfactory product, with reduced manufacturing times and complexities.

## Claims

1. A process for the manufacture of an acousto-optic tunable filter in which both an optical waveguide and an acoustic waveguide are formed in a substrate by the steps of photolithographing a desired pattern of strips on the substrate for the formation of the waveguides, depositing on the substrate a substrate dopant, and then diffusing the dopant into the substrate by soaking the substrate at an elevated temperature for a protracted period, in which process both the thickness and the width of the deposited dopant for forming the optical waveguide are selected having regard to the soaking period required to form the acoustic waveguide, so that an optical waveguide having a pre-determined mode geometry will be formed in substantially the same soaking period as is required to form the acoustic waveguide.

2. A process as claimed in claim 1, wherein the thickness of the deposited dopant for forming the optical waveguide is substantially the same as the thickness of the deposited dopant for forming the acoustic waveguide.

3. A process as claimed in claim 1, wherein the thickness of the deposited dopant for forming the optical waveguide is greater than the thickness of the deposited dopant for forming the acoustic waveguide.

4. A process as claimed in any of the preceding claims, wherein the deposited thickness of the dopant for forming the acoustic waveguide falls in the range of 1000Å to 5000Å, and the deposited thickness of the dopant for forming the optical waveguide falls in the range of 400Å to 3500Å.

5. A process as claimed in claim 4, wherein the deposited thickness of the dopant for forming the optical waveguide falls in the range of 1700Å to 3500Å.

6. A process as claimed in claim 4 or claim 5, wherein the linewidth of the deposited dopant for forming the optical waveguide falls in the range of 2µm to 10µm.

7. A process as claimed in claim 6, wherein the linewidth of the deposited dopant for forming the optical waveguide is at least 4µm.

8. A process as claimed in any of the preceding claims, wherein the substrate comprises lithium niobate.

9. A process as claimed in claim 8 wherein the dopant comprises titanium or a titanium-bearing composition.

10. A process as claimed in any of the preceding claims, wherein the soaking time at the elevated temperature falls in the range of 20 hours to 60 hours, and the soaking temperature falls in the range of 1000°C to 1075°C.
